(19) Europäisches Patentamt / European Patent Office / Office européen des brevets

(11) **EP 3 996 359 B1**

(12) **EUROPEAN PATENT SPECIFICATION**

(45) Date of publication and mention
of the grant of the patent:
**12.03.2025  Bulletin 2025/11**

(21) Application number: **20861061.8**

(22) Date of filing: **07.09.2020**

(51) International Patent Classification (IPC):
*H04M 1/02* *(2006.01)*     *G02B 5/20* *(2006.01)*

(52) Cooperative Patent Classification (CPC):
**H04M 1/0264; G02B 7/021; H04M 1/0266;
H04N 23/55; H04N 23/57**

(86) International application number:
**PCT/KR2020/012041**

(87) International publication number:
**WO 2021/045594 (11.03.2021 Gazette 2021/10)**

(54) **ELECTRONIC DEVICE COMPRISING CAMERA MODULE**

ELEKTRONISCHE VORRICHTUNG MIT KAMERAMODUL

DISPOSITIF ÉLECTRONIQUE COMPRENANT UN MODULE DE CAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.09.2019  KR 20190111079**

(43) Date of publication of application:
**11.05.2022  Bulletin 2022/19**

(73) Proprietor: **Samsung Electronics Co., Ltd.**
**Suwon-si, Gyeonggi-do 16677 (KR)**

(72) Inventors:
• **SHIN, Sungyoung**
**Suwon-si, Gyeonggi-do 16677 (KR)**
• **BAE, Jaecheol**
**Suwon-si, Gyeonggi-do 16677 (KR)**
• **KIM, Changkeun**
**Suwon-si, Gyeonggi-do 16677 (KR)**
• **KIM, Hyunho**
**Suwon-si, Gyeonggi-do 16677 (KR)**
• **UHM, Minsuk**
**Suwon-si, Gyeonggi-do 16677 (KR)**
• **SHIN, Hyunchang**
**Suwon-si, Gyeonggi-do 16677 (KR)**
• **YANG, Byungduk**
**Suwon-si, Gyeonggi-do 16677 (KR)**
• **JUNG, Songhee**
**Suwon-si, Gyeonggi-do 16677 (KR)**
• **HER, Yongkoo**
**Suwon-si, Gyeonggi-do 16677 (KR)**

(74) Representative: **HGF**
**HGF Limited**
**1 City Walk**
**Leeds LS11 9DX (GB)**

(56) References cited:
CN-A- 110 062 082      CN-A- 110 149 470
CN-A- 110 191 216      CN-A- 110 191 271
CN-U- 209 267 639      KR-A- 20130 131 017
US-A1- 2014 063 265

## Description

[Technical Field]

Various embodiments of the disclosure relate to an electronic device including a camera module.

[Background Art]

Electronic devices, for example, portable electronic devices have been released in various sizes according to functions thereof and user preferences, and may include a large-screen touch display for securing wide visibility and convenience of operation. The electronic device may include at least one camera module as seen for example in CN110149470A, CN110062082A and CN110191216A. For example, the electronic device may include at least one camera module disposed around the display or through at least a portion of the display.

[Disclosure of Invention]

[Technical Problem]

An electronic device may include a display that may be viewed from the outside through at least a portion of a cover member (e.g., front plate, glass window, or front cover). In order to meet a demand for a large screen, an area of the display may be gradually expanded so as to be exposed through substantially an entire area of the cover member (e.g., front cover). In response to the expansion of the display area, a disposition structure of various electronic components, for example, at least one camera module disposed through the cover member may also be changed accordingly. When the camera module is disposed in an area (e.g., black matrix (BM) area or inactive area) other than the display area of the cover member, there may be a limitation in expanding the display area.

In order to promote the expansion of the display area and to smoothly dispose electronic components, the display may include an opening (e.g., punch hole or perforation hole) formed at a position facing a camera module. The camera module may perform a function thereof through the opening of the display and through a camera exposure area (formed by a printing area) formed in the cover member. A size of the camera exposure area may be determined by the size of an outer diameter of a barrel member of the camera module including a plurality of lenses. However, the barrel member supporting the lenses may have a limit in reducing an overall outer diameter thereof due to a limited design structure of a thickness thereof supporting the lens, and as a result, it may be difficult to reduce a camera exposure area formed in the cover member.

According to the present invention , there is provided an electronic device including a camera module.

According to various embodiments, there may be provided an electronic device including a camera module configured to have a relatively small camera exposure area (e.g., print area) even with the same angle of view.

According to various embodiments, there may be provided an electronic device including a camera module that can help expand a display area by having a relatively small camera exposure area.

[Solution to Problem]

According to to the present invention, an electronic device is provided as defined in independent claim 1, with preferred embodiments set out in the dependent claims 2 to 11.

[Advantageous Effects of Invention]

According to various embodiments of the disclosure, because a camera module is disposed under a display panel and an opening is not formed in the corresponding area, it may be advantageous for producing the display panel, and a light blocking member for performing an aperture function is disposed in a display, and because a size of the light blocking member is determined through a distance from a camera module and a preset angle of view, a camera exposure area visible from the outside can be reduced.

[Brief Description of Drawings]

In connection with the description of the drawings, the same or similar reference numerals may be used for the same or similar components.

FIG. 1 is a perspective view illustrating a front surface of a mobile electronic device according to various embodiments of the disclosure.
FIG. 2 is a perspective view illustrating a rear surface of the electronic device of FIG. 1 according to various embodiments of the disclosure.
FIG. 3 is an exploded perspective view illustrating the electronic device of FIG. 1 according to various embodiments of the disclosure.
FIG. 4 is an exploded perspective view illustrating a display according to various embodiments of the disclosure.
FIG. 5 is a partial cross-sectional view illustrating an electronic device taken along line A-A' of FIG. 1 according to various embodiments of the disclosure.
FIG. 6A is a partial cross-sectional view illustrating an electronic device in which an area B of FIG. 5 is enlarged according to various embodiments of the disclosure.
FIG. 6B is a partial plan view illustrating an electronic device when a front cover is viewed from above according to various embodiments of the disclosure.
FIGS. 7 and 8 are partial cross-sectional views illustrating a display panel including a light blocking member according to the present invention.

FIGS. 9A to 9D are partial cross-sectional views illustrating a display panel including a plurality of light blocking members according to various embodiments of the disclosure.

FIGS. 10A to 10D are partial cross-sectional views illustrating a display panel including a plurality of light blocking members according to various embodiments of the disclosure.

FIG. 11 is a partial cross-sectional view illustrating a display panel including a plurality of light blocking members according to various embodiments of the disclosure.

[Mode for the Invention]

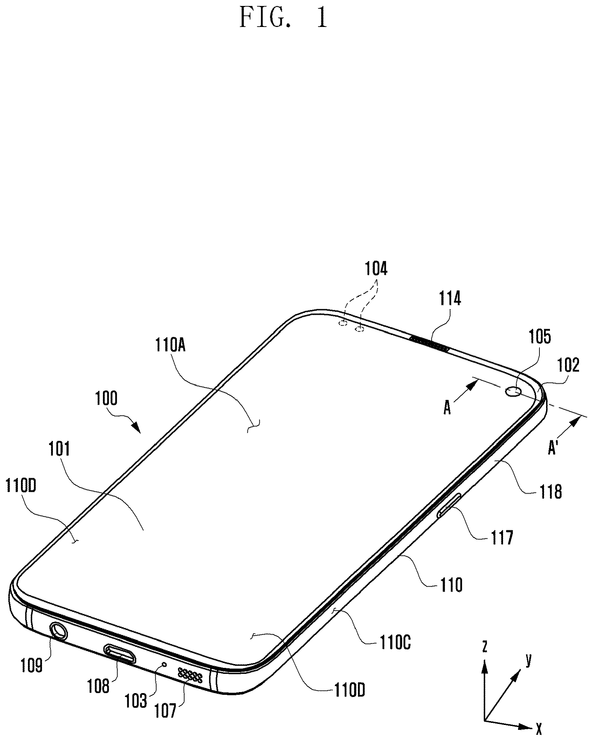

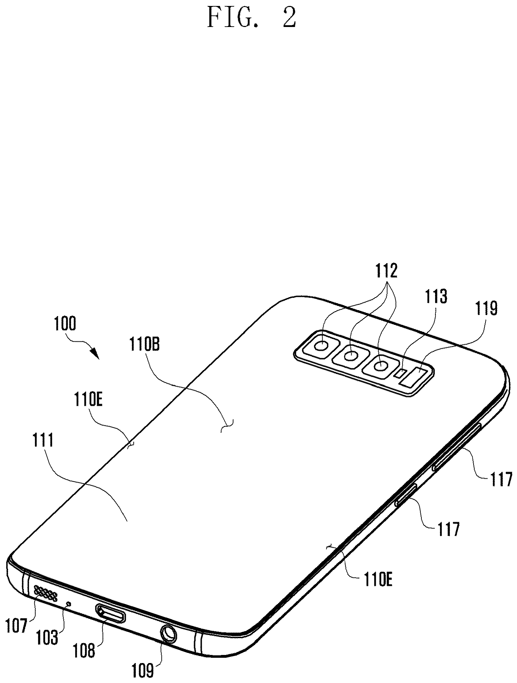

FIG. 1 illustrates a perspective view showing a front surface of a mobile electronic device according to an embodiment of the disclosure, and FIG. 2 illustrates a perspective view showing a rear surface of the mobile electronic device shown in FIG. 1 according to an embodiment of the disclosure.

Referring to FIGS. 1 and 2, a mobile electronic device 100 may include a housing 110 that includes a first surface (or front surface) 110A, a second surface (or rear surface) 110B, and a lateral surface 110C that surrounds a space between the first surface 110A and the second surface 110B. The housing 110 may refer to a structure that forms a part of the first surface 110A, the second surface 110B, and the lateral surface 110C. The first surface 110A may be formed of a front plate 102 (e.g., a glass plate or polymer plate coated with a variety of coating layers) at least a part of which is substantially transparent. The second surface 110B may be formed of a rear plate 111 which is substantially opaque. The rear plate 111 may be formed of, for example, coated or colored glass, ceramic, polymer, metal (e.g., aluminum, stainless steel (STS), or magnesium), or any combination thereof. The lateral surface 110C may be formed of a lateral bezel structure (or "lateral member") 118 which is combined with the front plate 102 and the rear plate 111 and includes a metal and/or polymer. The rear plate 111 and the lateral bezel structure 118 may be integrally formed and may be of the same material (e.g., a metallic material such as aluminum).

The front plate 102 may include two first regions 110D disposed at long edges thereof, respectively, and bent and extended seamlessly from the first surface 110A toward the rear plate 111. Similarly, the rear plate 111 may include two second regions 110E disposed at long edges thereof, respectively, and bent and extended seamlessly from the second surface 110B toward the front plate 102. The front plate 102 (or the rear plate 111) may include only one of the first regions 110D (or of the second regions 110E). The first regions 110D or the second regions 110E may be omitted in part. When viewed from a lateral side of the mobile electronic device 100, the lateral bezel structure 118 may have a first thickness (or width) on a lateral side where the first region 110D or the second region 110E is not included, and may have a second thickness, being less than the first thickness, on another lateral side where the first region 110D or the second region 110E is included.

The mobile electronic device 100 may include at least one of a display 101, audio modules 103, 107 and 114, sensor modules 104 and 119, camera modules 105, 112 and 113, a key input device 117, a light emitting device, and connector holes 108 and 109. The mobile electronic device 100 may omit at least one (e.g., the key input device 117 or the light emitting device) of the above components, or may further include other components.

The display 101 may be exposed through a substantial portion of the front plate 102, for example. At least a part of the display 101 may be exposed through the front plate 102 that forms the first surface 110A and the first region 110D of the lateral surface 110C. The display 101 may be combined with, or adjacent to, a touch sensing circuit, a pressure sensor capable of measuring the touch strength (pressure), and/or a digitizer for detecting a stylus pen. At least a part of the sensor modules 104 and 119 and/or at least a part of the key input device 117 may be disposed in the first region 110D and/or the second region 110E.

The input device 103 may include a microphone 103. The input device 103 may contain a plurality of microphones to sense a sound direction. The Audio output device 107 and 114 may include a plurality of speakers 107 and 114. The plurality of speakers 107 and 114 may be classified into an external speaker 107 and a call receiver 114. The microphone hole 103 and the speaker holes 107 and 114 may be implemented as a single hole, or a speaker (e.g., a piezo speaker) may be provided without the speaker holes 107 and 114.

he sensor modules 104 and 119 may generate electrical signals or data corresponding to an internal operating state of the mobile electronic device 100 or to an external environmental condition. The sensor modules 104 and 119 may include a first sensor module 104 (e.g., a proximity sensor) and/or a second sensor module (e.g., a fingerprint sensor) disposed on the first surface 110A of the housing 110, and/or a third sensor module 119 (e.g., a heart rate monitor (HRM) sensor) and/or a fourth sensor module (e.g., a fingerprint sensor) disposed on the second surface 110B of the housing 110. The fingerprint sensor may be disposed on the second surface 110B as well as the first surface 110A (e.g., the display 101) of the housing 110. The electronic device 100 may further include at least one of a gesture sensor, a gyro sensor, an air pressure sensor, a magnetic sensor, an acceleration sensor, a grip sensor, a color sensor, an infrared (IR) sensor, a biometric sensor, a temperature sensor, a humidity sensor, or an illuminance sensor.

The camera modules 105, 112 and 113 may include a first camera device 105 disposed on the first surface 110A of the electronic device 100, and a second camera device 112 and/or a flash 113 disposed on the second surface 110B. The camera module 105 or the camera module 112 may include one or more lenses, an image sensor, and/or an image signal processor. The flash 113 may include, for example, a light emitting diode or a xenon lamp. Two or more lenses (infrared cameras, wide angle and telephoto lenses) and image sensors may be disposed on one side of the electronic device 100.

The key input device 117 may be disposed on the lateral surface 110C of the housing 110. The mobile electronic device 100 may not include some or all of the key input device 117 described above, and the key input device 117 which is not included may be implemented in another form such as a soft key on the display 101. The key input device 117 may include the sensor module disposed on the second surface 110B of the housing 110.

The light emitting device may be disposed on the first surface 110A of the housing 110. For example, the light emitting device may provide status information of the electronic device 100 in an optical form. The light emitting device may provide a light source associated with the operation of the camera module 105. The light emitting device may include, for example, a light emitting diode (LED), an IR LED, or a xenon lamp.

The connector holes 108 and 109 may include a first connector hole 108 adapted for a connector (e.g., a universal serial bus (USB) connector) for transmitting and receiving power and/or data to and from an external electronic device, and/or a second connector hole 109 adapted for a connector (e.g., an earphone jack 109) for transmitting and receiving an audio signal to and from an external electronic device.

Some sensor modules 105 of camera modules 105 and 212, some sensor modules 104 of sensor modules 104 and 119, or an indicator may be arranged to be exposed through a display 101. For example, the camera module 105, the sensor module 104, or the indicator may be arranged in the internal space of an electronic device 100 so as to be brought into contact with an external environment through an opening of the display 101, which is perforated up to a front plate 102. In another embodiment, some sensor modules 104 may be arranged to perform their functions without being visually exposed through the front plate 102 in the internal space of the electronic device. For example, in this case, an area of the display 101 facing the sensor module may not require a perforated opening.

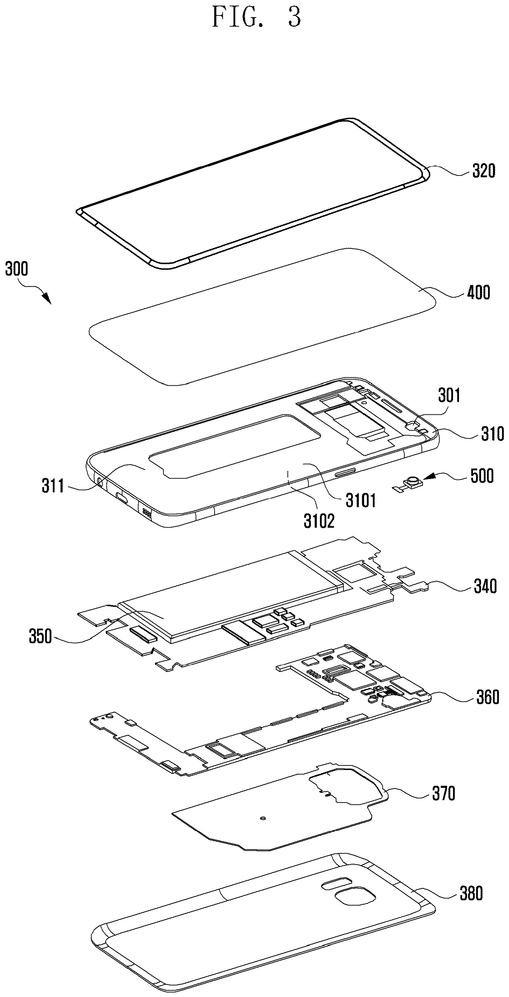

FIG. 3 illustrates an exploded perspective view showing a mobile electronic device shown in FIG. 1 according to an embodiment of the disclosure.

The electronic device 300 of FIG. 3 may include another embodiment of an electronic device that is at least partially similar to or different from the electronic device 100 of FIGS. 1 and 2.

Referring to FIG. 3, a mobile electronic device 300 may include a lateral bezel structure 310, a first support member 311 (e.g., a bracket), a front plate 320, a display 330, an electromagnetic induction panel (not shown), a printed circuit board (PCB) 340, a battery 350, a second support member 360 (e.g., a rear case), an antenna 370, and a rear plate 380. The mobile electronic device 300 may omit at least one (e.g., the first support member 311 or the second support member 360) of the above components or may further include another component. Some components of the electronic device 300 may be the same as or similar to those of the mobile electronic device 100 shown in FIG. 1 or FIG. 2, thus, descriptions thereof are omitted below.

The first support member 311 is disposed inside the mobile electronic device 300 and may be connected to, or integrated with, the lateral bezel structure 310. The first support member 311 may be formed of, for example, a metallic material and/or a non-metal (e.g., polymer) material. The first support member 311 may be combined with the display 330 at one side thereof and also combined with the printed circuit board (PCB) 340 at the other side thereof. On the PCB 340, a processor, a memory, and/or an interface may be mounted. The processor may include, for example, one or more of a central processing unit (CPU), an application processor (AP), a graphics processing unit (GPU), an image signal processor (ISP), a sensor hub processor, or a communications processor (CP).

The memory may include, for example, one or more of a volatile memory and a non-volatile memory.

The interface may include, for example, a high definition multimedia interface (HDMI), a USB interface, a secure digital (SD) card interface, and/or an audio interface. The interface may electrically or physically connect the mobile electronic device 300 with an external electronic device and may include a USB connector, an SD card/multimedia card (MMC) connector, or an audio connector.

The battery 350 is a device for supplying power to at least one component of the mobile electronic device 300, and may include, for example, a non-rechargeable primary battery, a rechargeable secondary battery, or a fuel cell. At least a part of the battery 350 may be disposed on substantially the same plane as the PCB 340. The battery 350 may be integrally disposed within the mobile electronic device 300, and may be detachably disposed from the mobile electronic device 300.

The antenna 370 may be disposed between the rear plate 380 and the battery 350. The antenna 370 may include, for example, a near field communication (NFC) antenna, a wireless charging antenna, and/or a magnetic secure transmission (MST) antenna. The antenna 370 may perform short-range communication with an external device, or transmit and receive power required for charging wirelessly. An antenna structure may be formed by a part or combination of the lateral bezel structure 310 and/or the first support member 311.

According to various embodiments, the first support member 311 of the side member 310 may include a first surface 3101 facing the front plate 320 and a second surface 3102 facing in a direction (e.g., rear plate direction) opposite to the first surface 3101. According to an embodiment, the camera module 500 (e.g., the camera module 105 of FIG. 1) may be disposed between the first support member 311 and the rear plate 380. According to an embodiment, the camera module 500 may be disposed to be visible or protruded in a direction of the front plate 320 through a through hole 301 connected from the first surface 3101 to the second surface 3102 of the first support member 311. According to an embodiment, a portion protruded through the through hole 301 of the camera module 500 may be disposed to detect an external environment at a corresponding position of the display 400. In another embodiment, when the camera module 500 is disposed between the display 400 and the first support member 311, the through hole 301 may be unnecessary.

Hereinafter, in the electronic device 300, the disposition relationship between the display 400 and the camera module 500 will be described in detail.

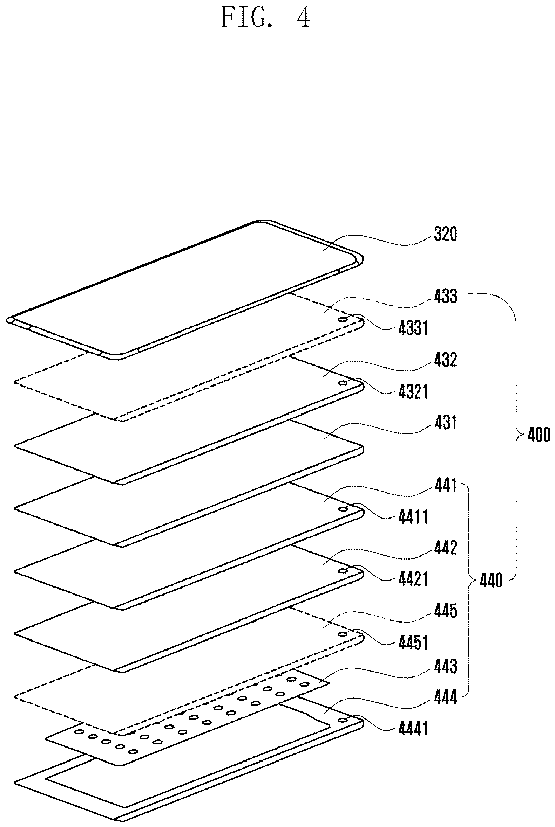

FIG. 4 is an exploded perspective view illustrating a display 400 according to various embodiments of the disclosure.

The display 400 of FIG. 4 may be at least partially similar to the display 101 of FIG. 1 or may further include other embodiments of the display.

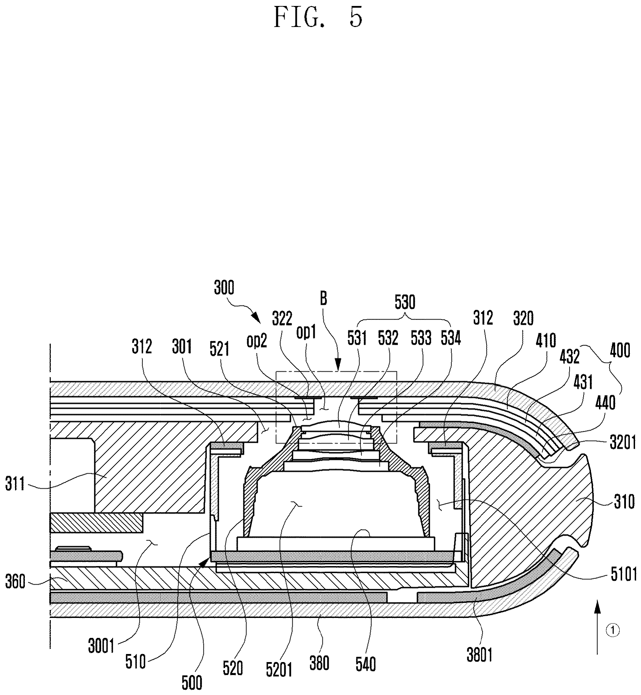

With reference to FIG. 4, the display 400 may include a display panel 431, a polarizer (POL) 432 (e.g., polarizing film) disposed through an adhesive member (e.g., an adhesive member 410 of FIG. 5) at a rear surface of the front cover 320 (e.g., front plate, glass plate, first cover member, or cover member), and at least one auxiliary material layer 440 attached to a rear surface of the display panel 431. According to an embodiment, the adhesive member may include an optical clear adhesive (OCA), a pressure sensitive adhesive (PSA), a heat reactive adhesive, a general adhesive, or a double sided tape. According to an embodiment, the display panel 431 and the POL 432 may be integrally formed.

According to various embodiments, the display 400 may include a control circuit (not illustrated). According to an embodiment, the control circuit may include a flexible printed circuit board (FPCB) that electrically connects a main printed circuit board (e.g., the printed circuit board 340 of FIG. 3) and the display panel 431 of the electronic device (e.g., the electronic device 300 of FIG. 3) and a display driver IC (DDI) mounted in the FPCB. According to an embodiment, the display 400 may additionally include a touch panel 433. According to an embodiment, when the display 400 operates as a display panel of an in-cell type including a touch panel capable of recognizing a touch inside the display panel according to a disposition position of the touch panel 433 or when the display 400 operates as a touch display of an on-cell type in which a touch panel is positioned outside the display panel, the control circuit may include a touch display driver IC (TDDI). In another embodiment, the display 400 may include a fingerprint sensor (not illustrated) disposed around the control circuit. According to an embodiment, the fingerprint sensor may include an ultrasonic type fingerprint sensor in contact with an outer surface of the front cover 320 through a hole at least partially formed in some of the components of the display 400 or capable of recognizing a shape of a fingerprint of a nearby finger by ultrasonic waves transmitted by a separate ultrasonic sensor or an optical fingerprint capable of emitting light through a separate light source or a light source (e.g., display light source) inside the electronic device, obtaining an image corresponding to a fingerprint through the emitted light, and recognizing a fingerprint based on the obtained image sensor.

According to various embodiments, the at least one auxiliary material layer 440 may include at least one polymer member 441 and 442 disposed at a rear surface of the display panel 431, at least one functional member 443 disposed at a rear surface of the at least one polymer member 441 and 442, and a conductive member 444 disposed at a rear surface of the at least one functional member 443. According to an embodiment, the at least one polymer member 441 and 442 may include a light blocking layer 441 (e.g., a black layer including an uneven pattern) for removing air bubbles that may be generated between the display panel 431 and lower attachments thereof, and for blocking light generated in the display panel 431 or light incident from the outside and/or a buffer layer 442 (e.g., sponge layer) disposed for mitigating an impact. According to an embodiment, the at least one functional member 443 may include a heat dissipation sheet (e.g., graphite sheet) for dissipating a heat, an added display, a force touch FPCB, a fingerprint sensor FPCB, an antenna radiator for communication, a conductive/non-conductive tape, or an open cell sponge. According to an embodiment, the conductive member 444 is a metal plate, which may help to reinforce rigidity of an electronic device (e.g., the electronic device 300 of FIG. 3), may be used for shielding ambient noise, and for dissipating a heat emitted from a heat radiation component of the periphery. According to an embodiment, the conductive member 444 may include Cu, Al, Mg, SUS, or CLAD (e.g., a stacked member in which SUS and Al are alternately disposed). In another embodiment, the display 400 may further include a detection member 445 for detecting an input by an electromagnetic induction type writing member (e.g., electronic pen). According to an embodiment, the detection member 445 may include a digitizer. According to an embodiment, the detection member 445 may be disposed between the at least one polymer member 442 and the functional member 443. In another embodiment, the detection member 445 may be disposed between the display panel 431 and the at least one polymer member 441.

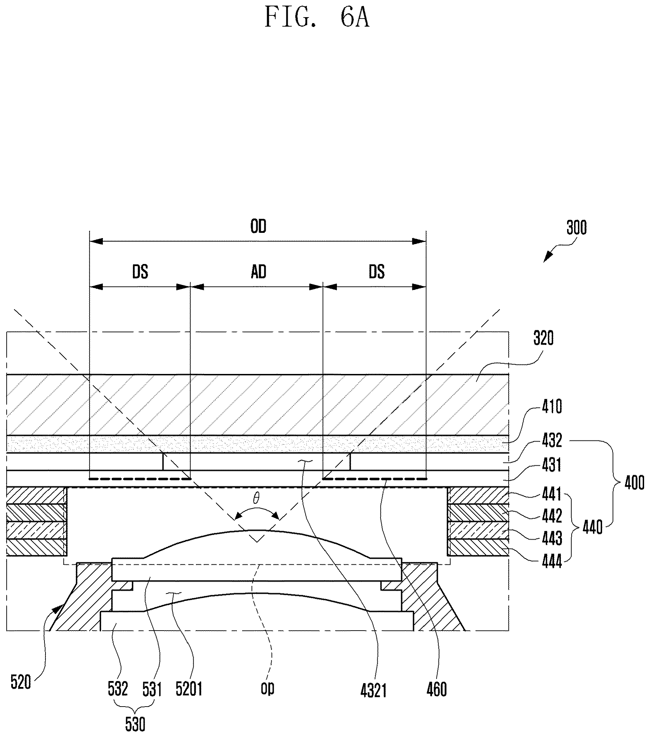

According to various embodiments, the display 400 may include a light blocking member (e.g., a light blocking member 460 of FIG. 6A) disposed inside the display panel 431, between the display panel 431 and the POL 432, or between the display panel 431 and the auxiliary material layer 440, and for performing a function of an aperture. According to an embodiment, as the light blocking member 460 is disposed closer to the camera module (e.g., a camera module 500 of FIG. 5) than the existing printing area, a diameter of an angle of view is minimized, so that a size of a camera exposure area (e.g., circular BM area) visible from the outside of the front cover 320 may be reduced through the light blocking member 460 that serves as an aperture.

According to various embodiments, the auxiliary material layer 440 may include openings 4411, 4421, 4451, and 4441 formed at positions corresponding to the camera module (e.g., the camera module 500 of FIG. 5). According to an embodiment, the camera module 500 may be disposed adjacent to the rear surface of the display panel 431 through the openings 4411, 4421, 4451, and 4441. According to an embodiment, in order to prevent a performance of the camera module 500 from decreasing due to a refractive index, openings 4321 and 4331 may be formed in a corresponding position of a touch panel 433 or the POL 432 disposed in an upper part of the display panel 431. In another embodiment, a position of the POL 432 and/or the touch panel 433 corresponding to the camera module 500 may be processed to be transparent or a polarization characteristic thereof may be removed. In another embodiment, layers without openings (e.g., the display panel 431 or the touch panel 433) may include a coating capable of index matching in order to minimize the refractive index difference. According to various embodiments, the display 400 may include an organic light emitting diode (OLED) display or a liquid crystal display (LCD).

FIG. 5 is a partial cross-sectional view illustrating an electronic device 300 taken along line A-A' of FIG. 1 according to various embodiments of the disclosure.

In describing FIG. 5, an unbreakable (UB) type OLED display (e.g., curved display) has been described as an example, but the disclosure is not limited thereto. For example, the UB type OLED display may be applied to a flat type display of an on cell touch active (OCTA) matrix organic light-emitting diode (AMOLED) type.

With reference to FIG. 5, the electronic device 300 may include a front cover 320 (e.g., cover member, front plate, front window, or first plate) facing in a first direction (direction ①), a rear cover 380 (e.g., rear cover member, rear plate, rear window, or second plate) facing in an opposite direction of the front cover 320, and a side member 310 enclosing a space 3001 between the front cover 320 and the rear cover 380. According to an embodiment, the electronic device 300 may include a first waterproof member 3201 disposed between an auxiliary material layer 440 of the display 400 and the side member 310. According to an embodiment, the electronic device 300 may include a second waterproof member 3801 disposed between the side member 310 and the rear plate 380. The first waterproof member 3201 and the second waterproof member 3801 may prevent outer foreign substances or moisture from being introduced into the internal space 3001 of the electronic device 300. In another embodiment, the waterproof member may be disposed in at least a portion of a mounting support structure of the side member 310 and the camera module 500. In another embodiment, the first waterproof member 3201 and/or the second waterproof member 3801 may be replaced with an adhesive member.

According to various embodiments, the side member 310 may further include a first support member 311 extended at least partially in the internal space 3001 of the electronic device 300. According to an embodiment, the first support member 311 may be formed by structural coupling with the side member 310. According to an embodiment, the first support member 311 may support the camera module 500 so that the camera module 500 is aligned and disposed near the rear surface of the display panel 431 through the opening (e.g., an opening OP of FIG. 6A) of the auxiliary material layer 440 of the display 400.

According to the present invention, the camera module 500 includes a camera housing 510, a lens housing 520 disposed in an internal space 5101 of the camera housing 510 and at least partially protruded in the display direction (e.g., direction①), a plurality of lenses 530: 531, 532, 533, and 534 disposed at regular intervals in an internal space 5201 of the lens housing 520, and at least one image sensor 540 disposed to obtain at least a portion of light passing through the plurality of lenses 530 in the internal space 5101 of the camera housing 510. According to an embodiment, when the camera module 500 includes an auto focus (AF) function, the lens housing 520 may be moved to change a distance from the camera housing 510 to the display panel 431 through a predetermined driving unit. According to an embodiment, in order for the camera module to perform an AF function, a separate driving unit may be disposed to change a position of at least one of the plurality of lenses 530. In another embodiment, in the camera module 500, the camera housing 510 may be omitted, and the lens housing 520 may be directly disposed in the first support member 311 through a predetermined alignment process. According to an embodiment, when the lens housing 520 is directly disposed in the first support member 311, in order to reduce a camera disposition space, the camera housing 510 may be omitted, and the lens housing 520 may be disposed to be attached to one side surface of the first support member 311. According to an embodiment, the camera module 500 may be aligned through a through hole 301 of the first support member 311 and then may be attached to the rear surface of the first support member 311 through the adhesive member 312 (e.g., bonding member or tape member).

According to various embodiments, the display 400 may include a touch panel (e.g., the touch panel 433 of FIG. 4), a POL 432, a display panel 431, a light blocking layer 441, a buffer layer (e.g., the buffer layer 442 of FIG. 4), a digitizer (e.g., the digitizer 445 of FIG. 4), a functional member (e.g., the functional member 443 of FIG. 4), and/or a conductive member (e.g., the conductive member 444 of FIG. 4). According to an embodiment, the camera module 500 may be supported by a second support member 360 (e.g., rear case) additionally disposed in the internal space of the electronic device.

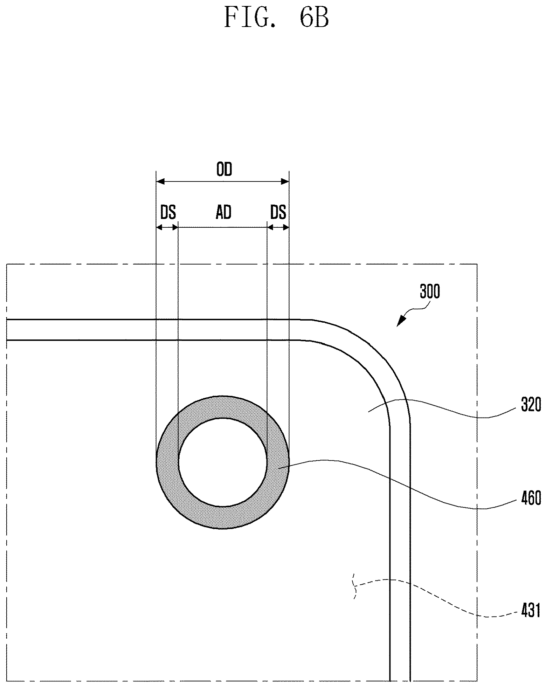

FIG. 6A is a partial cross-sectional view illustrating an enlarged area B of FIG. 5 according to various embodiments of the disclosure. FIG. 6B is a partial plan view illustrating an electronic device 300 when a front cover 320 is viewed from above according to various embodiments of the disclosure.

With reference to FIGS. 6A and 6B, the electronic device 300 may include an adhesive layer 410, a POL 432, a display panel 431, and an auxiliary material layer 440 disposed between the rear surface of the front cover 320 and the side member 310. According to an embodiment, when the front plate 320 is viewed from above, the POL 432 may include an opening 4321 formed to improve an optical transmittance of the camera module 500. In another embodiment, a portion corresponding to the opening 4321 in the adhesive member 410 disposed on the POL 432 may be at least partially omitted. In another embodiment, the opening 4321 formed in the POL 432 may be filled with a material for matching a refractive index according to an increase in interfacial reflection.

According to an embodiment, in an area of the POL 432 corresponding to the plurality of lenses 530, the opening 4321 may not be formed, and a transmittance may be high. For example, at least some areas of the POL 432 (e.g., areas corresponding to the plurality of lenses 530) may be made of a material having a transmittance different from that of areas of the POL 432 or may be configured with other members that can increase a transmittance. According to an embodiment, a member (not illustrated) for increasing a transmittance may be disposed on at least a portion (e.g., upper side surface or lower side surface) of an area corresponding to the plurality of lenses 530 of the POL 432. According to an embodiment, when the front cover 320 is viewed from above, the auxiliary material layer 440 may include an opening OP formed to correspond to an area overlapping the plurality of lenses 530. According to an embodiment, the opening OP formed in the auxiliary material layer 440 may be formed as one opening OP in a manner overlapped with an opening formed in the light blocking layer 441 (e.g., the opening 4411 of FIG. 4), an opening formed in the buffer layer 442 (e.g., the opening 4421 of FIG. 4), an opening formed in the functional member 443 (e.g., the opening 4431 of FIG. 4), and an opening formed in the conductive member 444 (e.g., the opening 4441 of FIG. 4). According to an embodiment, each of the openings may have different sizes corresponding to a shape of the camera module.

According to the present invention, the display 400 includes at least one light blocking member 460 (e.g., aperture) disposed in the display panel 431. The light blocking member 460 includes a light aperture area AD corresponding to an area overlapping an effective diameter of the lens 530. According to an embodiment, the light aperture area AD may be formed as an opening, and the opening may be formed by a blocking area DS (e.g., aperture area). At least portion among light outside the electronic device may be introduced through the formed opening and transferred to the image sensor 540 through the lens 530. An amount of light introduced into the image sensor is determined by the aperture, and as a size of the light aperture area AD increases, more light may be introduced into the image sensor. According to an embodiment, a total outer diameter OD of the light blocking member 460 may be formed by the sum of the light aperture area AD and the blocking area DS forming the light aperture area AD. According to an embodiment, a size of the light aperture area AD of the light blocking member 460 may be determined based on a preset angle of view $\theta$ of the lens 530 of the camera module 500.

According to various embodiments, when the front cover 320 is viewed from above, the display panel 431 may be configured such that pixels and/or wires are not disposed in an area of the display panel 431 overlapping the light aperture area AD in order to improve an optical transmittance. In another embodiment, when the front cover 320 is viewed from above, the display panel 431 may be configured so that the area overlapping the light aperture area AD has a pixel density and/or a wiring density lower than that of a peripheral active area (e.g., active area) in order to improve an optical transmittance. According to various embodiments, when the front cover 320 is viewed from above, at least a partial area of the area of the display panel 431 overlapping the light aperture area AD may be made of a material having a high transmittance in order to improve an optical transmittance.

According to an exemplary embodiment of the disclosure, in the light blocking member 460, in order to block unnecessary light introduced from the outside to the vicinity of the light aperture area AD of the display panel 431 and to block a light leakage phenomenon, a blocking width (e.g., minimum size width) of the blocking area DS may be determined. For example, through the blocking area DS determined to the minimum size of the light blocking member 460, a size of the camera exposure area (a BM area formed by the light blocking member) visible from the outside may be reduced. In another embodiment, the light blocking member 460 may be separately disposed or printed using an opaque material (ink, resin, etc.). In another embodiment, the light blocking member 460 may be formed using an opaque component (electrode or wiring) inside the originally existing display.

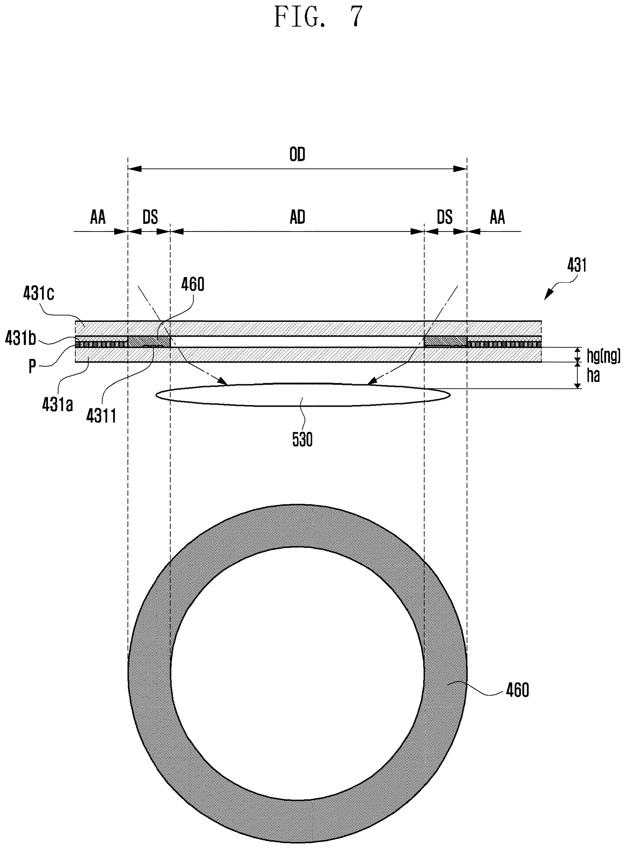

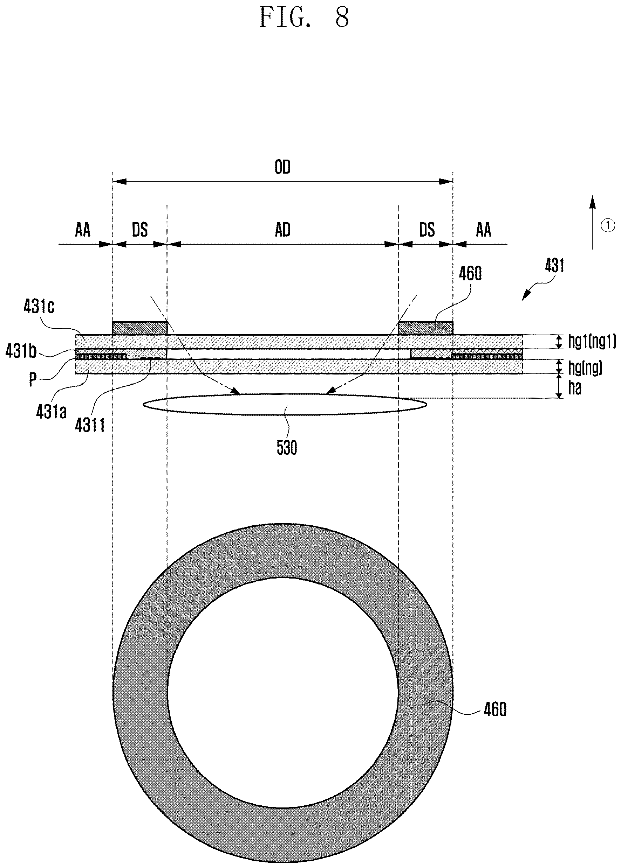

FIGS. 7 and 8 are partial cross-sectional views illustrating a display panel including a light blocking member according to the present invention.

With reference to FIG. 7, the display panel 431 may include an active area AA for displaying a screen, a blocking area DS formed through the light blocking member 460 extended from the active area AA, and a light aperture area AD formed through the blocking area DS. According to the present invention, external light may be introduced into the lens 530 only through the light aperture area AD by the blocking area DS of the light blocking member 460. The display panel 431 includes a substrate layer 431a, an encap layer 431c, and an intermediate layer 431b disposed between the substrate layer 431a and the encap layer 431c. According to the present invention, the display panel 431 includes a plurality of pixels P disposed in the intermediate layer 431b. According to an embodiment, each of the plurality of pixels P may include a first sub-pixel, a second sub-pixel, and a third sub-pixel, and be driven to display a color with one pixel P using at least one sub-pixel. According to an embodiment, the first sub-pixel, the second sub-pixel, and the third sub-pixel may be defined as one pixel P. According to an embodiment, in the intermediate layer 431a, the display panel 431 may include a plurality of pixel electrodes disposed to correspond to each sub-pixel area, a plurality of organic material layers disposed on the pixel electrode, and a common electrode disposed on the plurality of organic material layers. According to the present invention, each of the plurality of organic material layers may include an organic light emitting layer (e.g., organic light emitting material) that emits light of a first color (e.g., red), a second color (e.g., green), and a third color (e.g., blue). According to an embodiment, the organic light emitting layer may be disposed between a pair of stacked common layers. According to an embodiment, one common layer may include a hole injection layer (HIL) and/or a hole transport layer (HTL). According to an embodiment, the other common layer may include an electron transport layer (ETL) and/or an electron injection layer (EIL). However, the disclosure is not limited thereto, and the common layer may further include various functional layers while including the organic light emitting layer.

According to various embodiments, the substrate layer 431a may include an electrical connection member electrically connected to each of the plurality of pixel electrodes. According to an embodiment, the electrical connection member may include a thin film transistor (TFT) or a low temperature passivation transistor (LTPS). According to an embodiment, in order to protect a counter electrode, the encap layer 431c may be disposed thereon.

According to the present invention, the display panel 431 includes a light blocking member 460 disposed in the intermediate layer 431b between the substrate layer 431a and the encap layer 431c in the blocking area DS. According to an embodiment, in the blocking area DS, a plurality of pixel electrodes and an organic material layer may not be disposed in the intermediate layer 431b. In another embodiment, for convenience of a producing process, in the blocking area DS, the intermediate layer 431b may include only a plurality of pixel electrodes 4311.

According to an embodiment, when a plurality of organic material layers are formed during a producing process of the display panel 431, the light blocking member 460 may include an opaque (black) organic material or sealant formed together in the intermediate layer. In another embodiment, in the intermediate layer 431b, the light blocking member 460 may be replaced with a plurality of pixel electrodes disposed on the substrate layer 431a in order to have a high disposition density.

According to the present invention, in the light blocking member 460, in order to block unnecessary light introduced into the plurality of lenses 530 and to prevent a light leakage phenomenon, a blocking width (e.g., a blocking width of the minimum size) of the blocking area DS may be determined. For example, a blocking width DS1 of the blocking area DS may be determined through Equation 1.

[Equation 1]

$$DS1 \geq (ha + \frac{hg}{ng}) \times \tan\frac{\theta}{2}$$

where ha is a vertical distance from an end portion of an effective diameter of the lens 530 to a rear surface of the display panel 431, hg is a vertical distance from the rear surface of the display panel 431 to the light blocking member 460, ng is a refractive index of a material (e.g., the substrate layer 431a) present between the rear surface of the display panel 431 and the light blocking member, and θ may include an angle of view formed by the lens 530. Accordingly, the blocking width DS1 of the blocking area DS of the light blocking member 460 may be formed in a size satisfying at least a condition of Equation 1. For example, when the vertical distance from the end portion of the effective diameter of the lens 530 to the rear surface of the display panel 431 is defined as 0.3 mm, the vertical distance from the rear surface of the display panel 431 to the light blocking member 460 is defined as 0.3 mm, the refractive index of the substrate layer 431a is defined as 1.5, and the angle of view of the lens 530 is defined as 80°, the blocking width DS1 of the blocking area DS of the light blocking member 460 may be determined to 0.420 mm based on Equation 1. Accordingly, the blocking width of the blocking area DS of the light blocking member 460 may be at least 0.420 mm.

Because a minimum size of a blocking width of the blocking area DS of the light blocking member 460 according to an exemplary embodiment of the disclosure may be determined based on a vertical distance from the lens 530 to the light blocking member 460 and a preset angle of view formed by the lens 530, a size of a camera exposure area visible from the outside through the front cover (e.g., the front cover 320 of FIG. 6B) of the electronic device (e.g., the electronic device 300 of FIG. 6B) or a BM area including the camera exposure area may be reduced.

With reference to FIG. 8, the light blocking member 460 may be disposed at one side surface of the display panel (e.g., in a η direction of FIG. 8, the upper surface). For example, at least a portion of the light blocking member may be disposed between the display panel and the POL. In this case, the light blocking member may include a black printed layer (e.g., black resin), a sealant, or an opaque tape member formed to have a reflectivity (e.g., a reflectivity of 99% or more) disposed at the upper surface of the display panel or the rear surface of the POL or to substantially reflect most of incoming light.

According to various embodiments, in order to block at least a portion of light introduced from the outside to the periphery of the light aperture area AD of the display panel 431 or light (light that may be applied as noise) that is not required for image acquisition through the lens of the electronic device and to prevent a light leakage phenomenon, a blocking width (e.g., a blocking width of a minimum size) of the blocking area DS of the light blocking member 460 may be determined. For example, the blocking width DS1 of the blocking area DS may be determined through Equation 2.

[Equation 2]

$$DS1 \geq (ha + \frac{hg}{ng} + \frac{hg1}{ng1}) \times \tan\frac{\theta}{2}$$

where ha is a vertical distance from an end portion of the effective diameter of the lens 530 to the rear surface of the display panel 431, hg is a thickness of the substrate layer 431a of the display panel 431, ng is a refractive index of the substrate layer 431a, hg1 is a thickness of the encap layer 431c of the display panel 431, ng1 is a refractive index of the encap layer 431c, and θ may include an angle of view formed by the lens 530. Accordingly, the blocking width DS1 of the blocking area DS of the light blocking member 460 may be formed in a size satisfying at least a condition of Equation 2 described above. For example, when the vertical distance from the end portion of the effective diameter of the lens 530 to the rear surface of the display panel 431 is defined as 0.3 mm, the thickness of the substrate layer 431a is defined as 0.3 mm, the refractive index of the substrate layer 431a is defined as 1.5, the thickness of the encap layer is defined as 0.3 mm, the refractive index of the encap layer is defined as 1.5, and the angle of view of the lens 530 is defined as 80°, the blocking width DS1 of the blocking area DS of the light blocking member 460 may be determined to 0.587 mm based on Equation 2. Accordingly, the blocking width of the blocking area DS of the light blocking member 460 may be formed in at least 0.587 mm.

According to various embodiments, as illustrated in FIGS. 7 and 8, when it is considered that the distance from the lens 530 to the rear surface of the display panel 431 is substantially the same and that the light blocking member 460 has different disposition positions, it may be seen that as the vertical distance between the light blocking member 460 and the lens 530 is shorter, the blocking width DS1 of the blocking area DS of may be reduced.

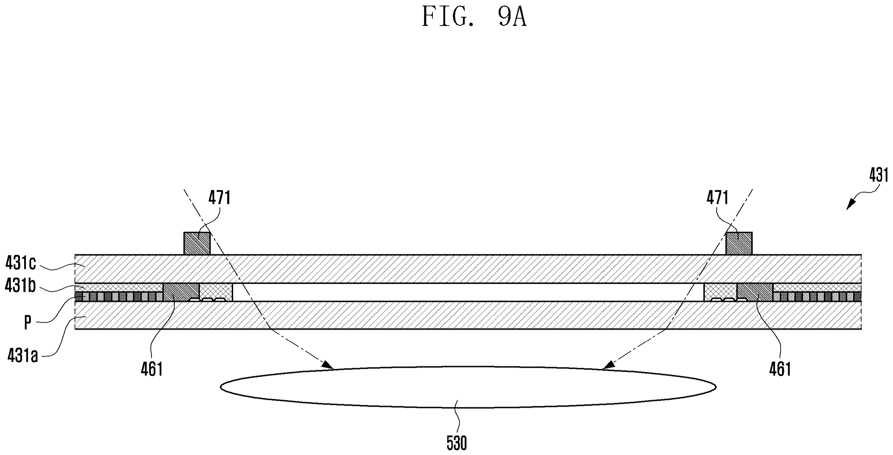

FIGS. 9A to 9D are partial cross-sectional views illustrating a display panel including a plurality of light blocking members according to various embodiments of the disclosure.

According to various embodiments, at least two light blocking members may be disposed in different layers inside and/or outside the display panel.

In describing a configuration of the display panel 431 of FIGS. 9A to 9D, the same reference numerals are given to components substantially the same as those of the display panel 431 of FIG. 7, and a detailed description thereof may be omitted.

With reference to FIG. 9A, the display panel 431 may include two light blocking members 461 and 471. According to an embodiment, the two light blocking members 461 and 471 may include a first light blocking member 461 disposed in the intermediate layer 431b of the display panel 431 and a second light blocking member 471 disposed on one side surface (e.g., the encap layer 431c) of the display panel 431. According to an embodiment, the first light blocking member 461 may be formed in substantially the same manner as the light blocking member 460 of FIG. 7. According to an embodiment, the second light blocking member 471 may be formed in substantially the same manner as the light blocking member 460 of FIG. 8. According to an embodiment, when the display panel 431 is viewed from above, the first light blocking member 461 and the second light blocking member 471 may be disposed to at least partially overlap. In another embodiment, when the display panel 431 is viewed from above, even if the first light blocking member 461 and the second light blocking member 471 do not overlap at least partially, they may be disposed continuously without substantially disconnection.

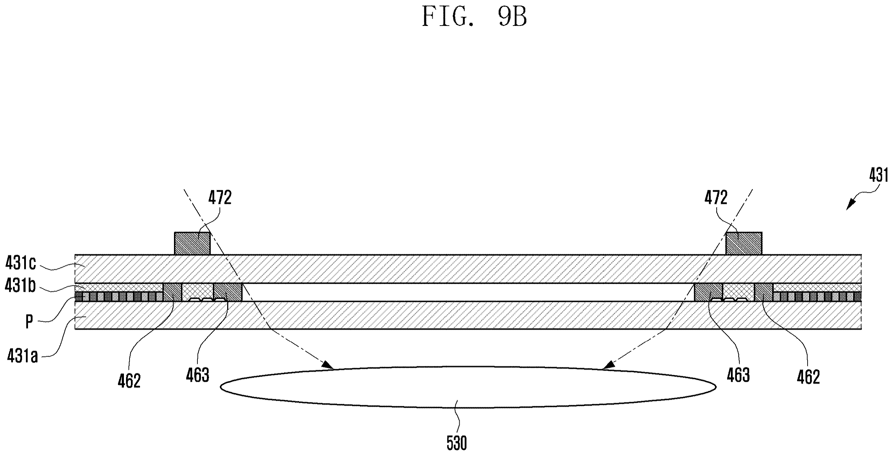

With reference to FIG. 9B, the display panel 431 may include three light blocking members 462, 463, and 472. According to an embodiment, two light blocking members 462 and 463 of the three light blocking members 462, 463, and 472 may include a first light blocking member 462 and a second light blocking member 463 disposed to be spaced apart from each other in the intermediate layer 431b of the display panel 431. The other light blocking member 472 may include a third light blocking member 472 disposed at one side surface of the display panel 431 (e.g., an upper surface of the encap layer 431c). According to an embodiment, the first light blocking member 462 and the second light blocking member 463 may be formed in substantially the same manner as the light blocking member 460 of FIG. 7. According to an embodiment, the third light blocking member 472 may be formed in substantially the same manner as the light blocking member 460 of FIG. 8. According to an embodiment, when the display panel 431 is viewed from above, the first light blocking member 462 and/or the second light blocking member 463 and the third light blocking member 472 may be disposed to overlap at least partially. In another embodiment, when the display panel 431 is viewed from above, even if the first light blocking member 462 and/or the second light blocking member 463, and the third light blocking member 472 are not at least partially overlapped, they may be continuously disposed without substantially disconnection.

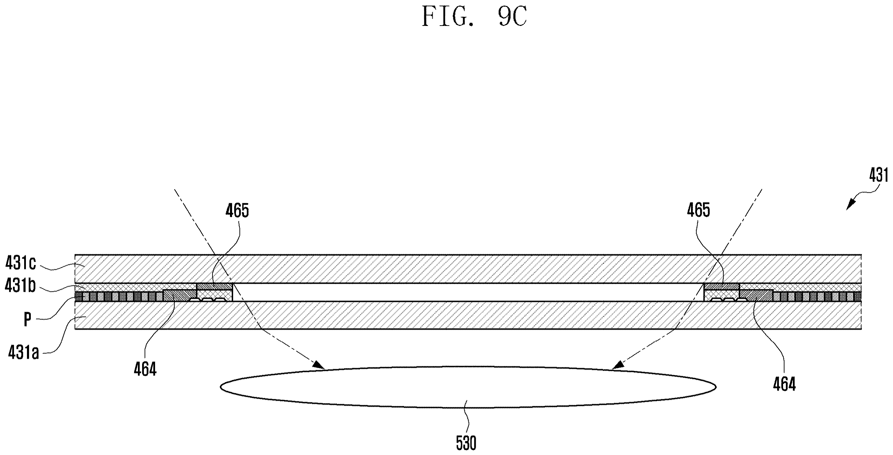

With reference to FIG. 9C, the display panel 431 may include a first light blocking member 464 and a second light blocking member 465 disposed in different layers (e.g., two layers), respectively in the intermediate layer 431b. According to an embodiment, the first light blocking member 464 and the second light blocking member 465 may be formed in substantially the same manner as the light blocking member 460 of FIG. 7. According to an embodiment, when the display panel 431 is viewed from above, the first light blocking member 464 and the second light blocking member 465 may be disposed to at least partially overlap. In another embodiment, even if the display panel 431 is viewed from above, the first light blocking member 464 and the second light blocking member 465 do not at least partially overlap, they may be continuously disposed without disconnection.

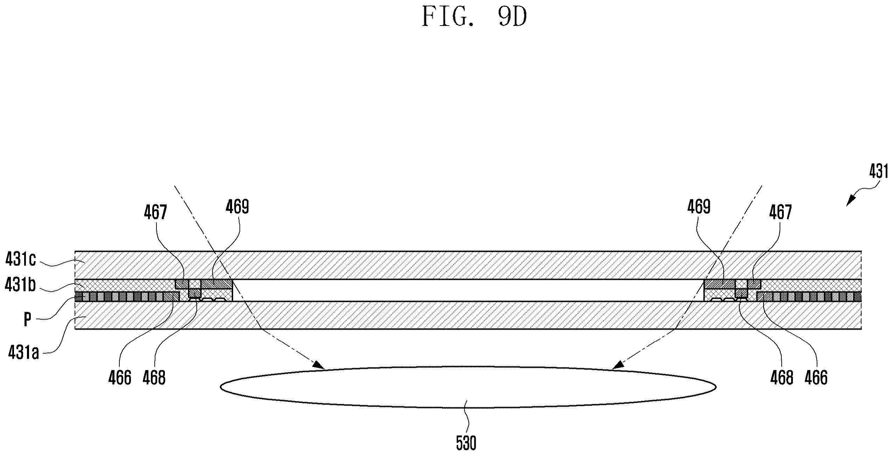

With reference to FIG. 9D, the display panel 431 may include a first light blocking member 466, a second light blocking member 467, a third light blocking member 468, and a fourth light blocking member 469 disposed in different layers (e.g., three layers) included in the intermediate layer 431b. According to an embodiment, the intermediate layer 431b of the display panel 431 may include a plurality of layers, and a plurality of blocking members may be disposed in the plurality of layers. According to an embodiment, when the plurality of blocking members are included in different layers, an effect capable of blocking side light by various lights may occur. For example, when a plurality of layers are formed at a predetermined height, there may occur an effect that each blocking member may be disposed to block light entering from the side surface. For example, the first light blocking member 466, the second light blocking member 467, the third light blocking member 468, and the fourth light blocking member 469 may be formed in substantially the same manner as that of the light blocking member 460 of FIG. 7. According to an embodiment, when the display panel 431 is viewed from above, the first light blocking member 466, the second light blocking member 467, and the third light blocking member 468 may be disposed to at least partially overlap. In another embodiment, when the display panel 431 is viewed from above, even if the first light blocking member 466, the second light blocking member 467, the third light blocking member 468, and the fourth light blocking member 469 do not overlap at least partially, they may be disposed continuously without disconnection each other.

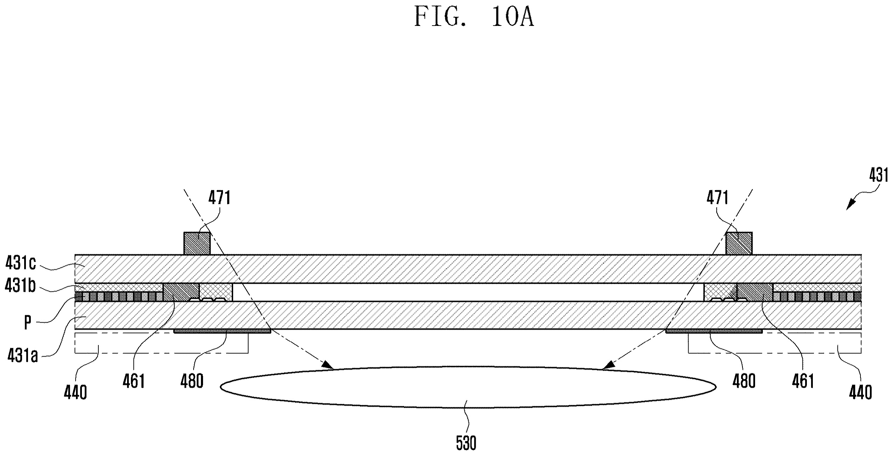

FIGS. 10A to 10D are partial cross-sectional views illustrating a display panel 431 including a plurality of light blocking members according to various embodiments of the disclosure.

A disposition configuration of the display panel 431 of FIGS. 10A to 10D and at least one light blocking member disposed at the inside and/or an upper surface of the display panel is substantially the same as each corresponding drawing of FIGS. 9A to 9D; thus, a detailed description thereof may be omitted.

With reference to FIG. 10A, the display panel 431 may include an additional light blocking member 480 disposed at the rear surface of the display panel 431 including the first light blocking member 461 and the second light blocking member 471 disposed substantially in the same manner as that of FIG. 9A. According to an embodiment, the additional light blocking member 480 may be disposed between the display panel 431 and the auxiliary material layer 440. According to an embodiment, when the display panel 431 is viewed from above, the additional light blocking member 480 may be disposed to at least partially overlap the first light blocking member 461 and/or the second light blocking member 471 disposed at the inside and/or the upper surface of the display panel 431. According to an embodiment, the additional light blocking member 480 may include a black printed layer, a black matrix (BM), or an opaque tape member disposed at the rear surface of the display panel 431.

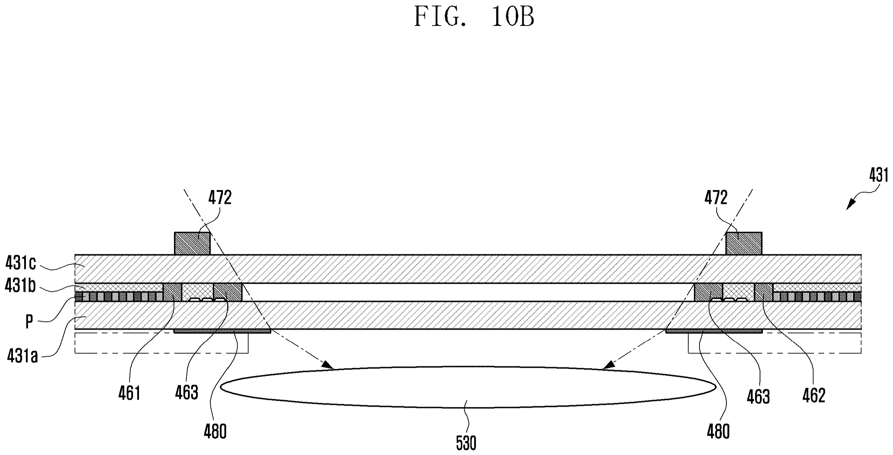

With reference to FIG. 10B, the display panel 431 may include an additional light blocking member 480 disposed at the rear surface of the display panel 431 including a first light blocking member 462, a second light blocking member 463, and a third light blocking member 472 disposed substantially the same as that of FIG. 9B. According to an embodiment, the additional light blocking member 480 may be disposed between the display panel 431 and the auxiliary material layer 440. According to an embodiment, when the display panel 431 is viewed from above, the additional light blocking member 480 may be disposed to overlap at least one of the first light blocking member 462, the second light blocking member 463, or the third light blocking member 472 disposed at the inside and/or the upper surface of the display panel 431.

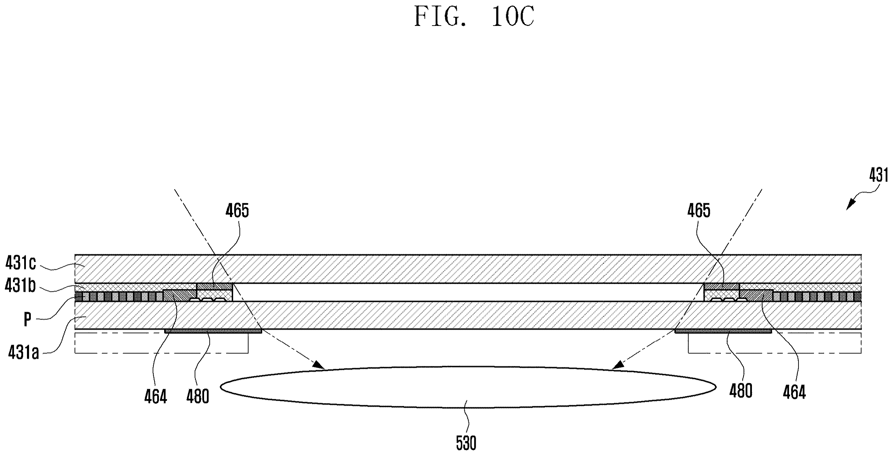

With reference to FIG. 10C, the display panel 431 may include an additional light blocking member 480 disposed at the rear surface of the display panel 431 including a first light blocking member 464 and a second light blocking member 465 disposed substantially the same as that of FIG. 9C. According to an embodiment, the additional light blocking member 480 may be disposed between the display panel 431 and the auxiliary material layer 440. According to an embodiment, when the display panel 431 is viewed from above, the additional light blocking member 480 may be disposed to overlap with at least one of the first light blocking member 464 or the second light blocking member 465 disposed inside the display panel 431.

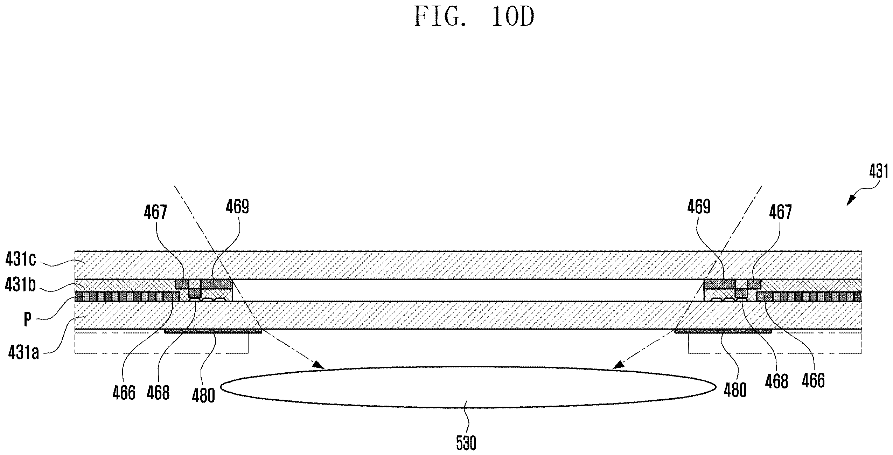

With reference to FIG. 10D, the display panel 431 may include an additional light blocking member 480 disposed at the rear surface of the display panel 431 including a first light blocking member 466, a second light blocking member 467, a third light blocking member 468, and a fourth light blocking member 469 disposed substantially the same as that of FIG. 9D. According to an embodiment, the additional light blocking member 480 may be disposed between the display panel 431 and the auxiliary material layer 440. According to an embodiment, when the display panel 431 is viewed from above, the additional light blocking member 480 may be disposed to overlap at least one of the first light blocking member 466, the second light blocking member 467, the third light blocking member 468, or the fourth light blocking member 469 disposed inside the display panel 431.

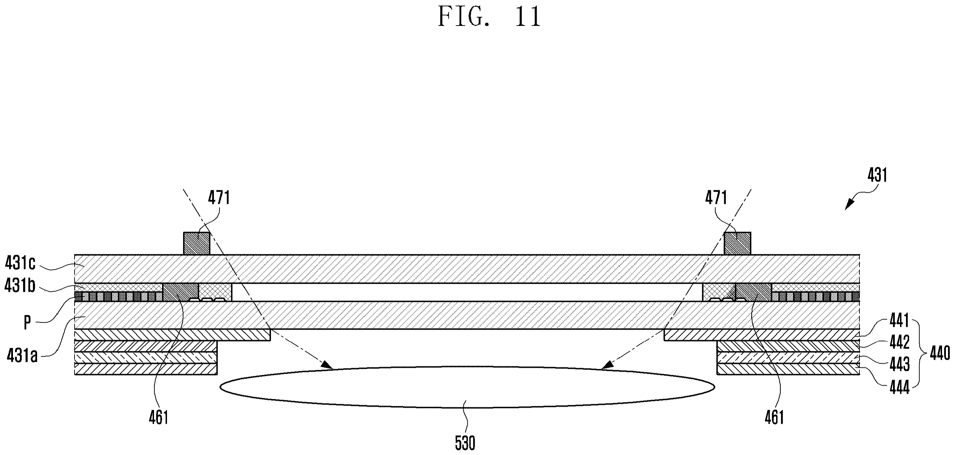

FIG. 11 is a partial cross-sectional view illustrating a display panel including a plurality of light blocking members according to various embodiments of the disclosure.

FIG. 11 illustrates a diagram in which an auxiliary material layer 440 is disposed at the rear surface of the display panel 431 including the first light blocking member 461 and the second light blocking member 471 of FIG. 9A, and in which at least a portion of the auxiliary material layer 440 is applied as an additional light blocking member. However, the disclosure is not limited thereto, and the display panel 431 of FIGS. 9B and 9D may also be applied as an additional light blocking member of the same manner.

With reference to FIG. 11, a separate member is not added to the additional light blocking member, and at least one of the components 441, 442, 443, or 444 of the auxiliary material layer 440 disposed at the rear surface of the display panel 431 may be disposed or formed to perform a function of the additional light blocking member. For example, at least a portion of the light blocking layer 441 of an opaque material facing the display panel 431 among the auxiliary material layers 440 may be used as a light blocking member. In this case, the light blocking layer 441 may include an opening having the same size as or a different size from that of other peripheral auxiliary material layers (e.g., the buffer layer 442, the functional member 443, and the conductive member 444). In another embodiment, the additional light blocking member may be formed through at least two layers of the auxiliary material layer 440.

The embodiments of the disclosure disclosed in this specification and drawings only present a specific example in order to easily describe the technical contents according to an embodiment of the disclosure and to help an understanding of the embodiments of the disclosure, and they do not intend to limit the scope of the embodiments of the disclosure. Accordingly, all changes or modifications derived from the technical idea of various embodiments of the disclosure in addition to the embodiments described herein should be construed as being included in the scope of various embodiments of the disclosure.

**Claims**

1. An electronic device, comprising:

   a housing (310);
   a display (400) configured to be visible from the outside through at least a portion of the housing and including a display area;
   a camera module (500) disposed under the display and that overlaps at least a portion of the display area and not including an aperture structure,
   wherein the camera module comprises:

   a lens housing (520);
   at least one lens (530, 531, 532, 533) disposed in the lens housing; and
   at least one image sensor (540) configured to obtain external light passing through the at least one lens into the camera module,
   wherein the display comprises a display panel (431), the display panel comprising, a substrate layer (431a); an intermediate layer (431b) including a plurality of pixel electrodes, P, stacked on the substrate layer, and organic light emitting layers disposed in each of the plurality of pixel electrodes; and an encap layer (431c) disposed on the intermediate layer,
   and at least one light blocking member (460) including a blocking area (DS) configured to block at least a portion of the external light to be transmitted into the display panel and/or light from leaking out of the display panel, wherein the at least one light blocking member (460) is disposed in the intermediate layer, and
   the at least one light blocking member defines a light aperture area (AD) through which light can be transmitted.

2. The electronic device of claim 1, wherein the organic light emitting layers are omitted in an area overlapping the light aperture area of the display panel when the display is viewed from above.

3. The electronic device of claim 1, wherein the electrodes are omitted in an area overlapping the light aperture area of the display panel (431) when the display is viewed from above.

4. The electronic device of claim 1, wherein an area overlapping the light aperture area of the display panel (431) is configured such that a disposition density of the plurality of electrodes and/or the organic light emitting material is smaller than that of a peripheral display area when the display is viewed from above.

**5.** The electronic device of claim 1, wherein the at least one light blocking member comprises a plurality of light blocking members (464, 465, 466, 467, 468, 469) disposed in at least two different layers, respectively, within the intermediate layer (431b).

**6.** The electronic device of claim 5, wherein the plurality of light blocking members are overlapped at least partially when the display panel (431) is viewed from above.

**7.** The electronic device of claim 1, further comprising at least one additional light blocking member (471, 472, 480) disposed at an upper surface and/or a rear surface of the display panel (431).

**8.** The electronic device of claim 7, wherein the at least one additional light blocking member (471, 472, 480) at least partially overlaps the at least one light blocking member (461, 462, 463) disposed in the intermediate layer (431b) when the display panel (431) is viewed from above.

**9.** The electronic device of claim 7, wherein the at least one additional light blocking member is disposed continuously without disconnecting to each other with the at least one light blocking member disposed in the intermediate layer (431b) when the display panel (431) is viewed from above.

**10.** The electronic device of claim 1, wherein the blocking width of the blocking area of the at least one light blocking member is formed at least equal to or larger than a size determined by <Equation 1>.

<Equation 1>

$$DS1 \geq (ha + \frac{hg}{ng}) \times \tan\frac{\theta}{2}$$

wherein ha is a vertical distance from an end portion of an effective diameter of the lens (530, 531, 532, 533) to a rear surface of the display panel (431), hg is a vertical distance from the rear surface of the display panel to the light blocking member, ng is a refractive index of a material present between the rear surface of the display panel and the light blocking member, and θ is an angle of view formed by the lens.

**11.** The electronic device of claim 1, wherein the display (400) comprises a polarizing member, POL, (432) stacked in an upper portion of the display panel (431), and
the at least one light blocking member is disposed between the polarizing member and the display panel.

**Patentansprüche**

**1.** Elektronische Vorrichtung, umfassend:

ein Gehäuse (310);
eine Anzeige (400), die dazu konfiguriert ist, von der Außenseite aus durch mindestens einen Abschnitt des Gehäuses sichtbar zu sein, und einen Anzeigebereich beinhaltet;
ein Kameramodul (500), das unter der Anzeige angeordnet ist und das mindestens einen Abschnitt des Anzeigebereichs überlappt und keine Blendenstruktur beinhaltet,
wobei das Kameramodul Folgendes umfasst:

ein Objektivgehäuse (520);
mindestens ein Objektiv (530, 531, 532, 533), das in dem Objektivgehäuse angeordnet ist; und
mindestens einen Bildsensor (540), der dazu konfiguriert ist, externes Licht zu erhalten, das durch das mindestens eine Objektiv in das Kameramodul gelangt,
wobei die Anzeige eine Anzeigetafel (431) umfasst, wobei die Anzeigetafel eine Substratschicht (431a); eine Zwischenschicht (431b) einschließlich einer Vielzahl von Pixelelektroden, P, die auf der Substratschicht gestapelt sind, und organische lichtemittierende Schichten, die in jeder der Vielzahl von Pixelelektroden angeordnet sind; und eine Verkapselungsschicht (431c), die auf der Zwischenschicht angeordnet ist, umfasst,
und mindestens ein Lichtblockierungselement (460) einschließlich eines Blockierungsbereichs (DS), das dazu konfiguriert ist, die Übertragung mindestens eines Teils des externen Lichts in die Anzeigetafel zu blockieren und/oder zu verhindern, dass Licht aus der Anzeigetafel austritt, wobei das mindestens eine Lichtblockierungselement (460) in der Zwischenschicht angeordnet ist, und
das mindestens eine Lichtblockierungselement einen Lichtblendenbereich (AD) definiert, durch den Licht übertragen werden kann.

**2.** Elektronische Vorrichtung nach Anspruch 1, wobei die organischen lichtemittierenden Schichten in einem Bereich weggelassen sind, der den Lichtblendenbereich der Anzeigetafel überlappt, wenn die Anzeige von oben betrachtet wird.

**3.** Elektronische Vorrichtung nach Anspruch 1, wobei die Elektroden in einem Bereich weggelassen sind, der den Lichtblendenbereich der Anzeigetafel (431) überlappt, wenn die Anzeige von oben betrachtet wird.

4. Elektronische Vorrichtung nach Anspruch 1, wobei ein Bereich, der den Lichtblendenbereich der Anzeigetafel (431) überlappt, derart konfiguriert ist, dass eine Dispositionsdichte der Vielzahl von Elektroden und/oder des organischen lichtemittierenden Materials kleiner ist als diejenige eines peripheren Anzeigebereichs, wenn die Anzeige von oben betrachtet wird.

5. Elektronische Vorrichtung nach Anspruch 1, wobei das mindestens eine Lichtblockierungselement eine Vielzahl von Lichtblockierungselementen (464, 465, 466, 467, 468, 469) umfasst, die jeweils in mindestens zwei unterschiedlichen Schichten innerhalb der Zwischenschicht (431b) angeordnet sind.

6. Elektronische Vorrichtung nach Anspruch 5, wobei die Vielzahl von Lichtblockierungselementen mindestens teilweise überlappt ist, wenn die Anzeigetafel (431) von oben betrachtet wird.

7. Elektronische Vorrichtung nach Anspruch 1, ferner umfassend mindestens ein zusätzliches Lichtblockierungselement (471, 472, 480), das an einer oberen Fläche und/oder einer hinteren Fläche der Anzeigetafel (431) angeordnet ist.

8. Elektronische Vorrichtung nach Anspruch 7, wobei das mindestens eine zusätzliche Lichtblockierungselement (471, 472, 480) das mindestens eine Lichtblockierungselement (461, 462, 463), das in der Zwischenschicht (431b) angeordnet ist, mindestens teilweise überlappt, wenn die Anzeigetafel (431) von oben betrachtet wird.

9. Elektronische Vorrichtung nach Anspruch 7, wobei das mindestens eine zusätzliche Lichtblockierungselement kontinuierlich ohne Trennung voneinander mit dem mindestens einen Lichtblockierungselement angeordnet ist, das in der Zwischenschicht (431b) angeordnet ist, wenn die Anzeigetafel (431) von oben betrachtet wird.

10. Elektronische Vorrichtung nach Anspruch 1, wobei die Blockierungsbreite des Blockierungsbereichs des mindestens einen Lichtblockierungselements mindestens gleich oder größer als eine durch <Gleichung 1> bestimmte Größe ausgebildet ist,

<Gleichung 1>

$$DS1 \geq (ha + \frac{hg}{ng}) \times \tan\frac{\theta}{2},$$

wobei ha ein vertikaler Abstand von einem Endabschnitt eines Wirkdurchmessers des Objektivs (530, 531, 532, 533) zu einer hinteren Fläche der Anzeigetafel (431) ist, hg ein vertikaler Abstand von der hinteren Fläche der Anzeigetafel zu dem Lichtblockierungselement ist, ng ein Brechungsindex eines zwischen der hinteren Fläche der Anzeigetafel und dem Lichtblockierungselement vorhandenen Materials ist und θ ein von dem Objektiv gebildeter Betrachtungswinkel ist.

11. Elektronische Vorrichtung nach Anspruch 1, wobei die Anzeige (400) ein Polarisationselement, POL, (432) umfasst, das in einem oberen Abschnitt der Anzeigetafel (431) gestapelt ist, und das mindestens eine Lichtblockierungselement zwischen dem Polarisationselement und der Anzeigetafel angeordnet ist.

**Revendications**

1. Dispositif électronique, comprenant :

un boîtier (310) ;
un dispositif d'affichage (400) configuré pour être visible de l'extérieur à travers au moins une partie du boîtier et comprenant une zone d'affichage ;
un module de caméra (500) disposé sous le dispositif d'affichage et qui chevauche au moins une partie de la zone d'affichage et ne comprenant pas de structure d'ouverture,
dans lequel le module de caméra comprend :

un boîtier d'objectif (520) ;
au moins un objectif (530, 531, 532, 533) disposé dans le boîtier d'objectif ; et
au moins un capteur d'image (540) configuré pour obtenir une lumière externe passant à travers l'au moins un objectif dans le module de caméra,
dans lequel le dispositif d'affichage comprend un panneau d'affichage (431), le panneau d'affichage comprenant une couche de substrat (431a) ; une couche intermédiaire (431b) comprenant une pluralité d'électrodes de pixel, P, empilées sur la couche de substrat, et des couches électroluminescentes organiques disposées dans chacune de la pluralité d'électrodes de pixel ; et une couche d'encapsulation (431c) disposée sur la couche intermédiaire,
et au moins un élément de blocage de lumière (460) comprenant une zone de blocage (DS) configurée pour empêcher au moins une partie de la lumière externe d'être transmise dans le panneau d'affichage et/ou de la lumière de s'échapper hors du panneau d'affichage, dans lequel l'au moins un élément de blocage de lumière (460) est disposé dans la couche intermédiaire, et

l'au moins un élément de blocage de lumière définit une zone d'ouverture de lumière (AD) à travers laquelle la lumière peut être transmise.

2. Dispositif électronique de la revendication 1, dans lequel les couches électroluminescentes organiques sont omises dans une zone chevauchant la zone d'ouverture de lumière du panneau d'affichage lorsque le dispositif d'affichage est vu d'en haut.

3. Dispositif électronique de la revendication 1, dans lequel les électrodes sont omises dans une zone chevauchant la zone d'ouverture de lumière du panneau d'affichage (431) lorsque le dispositif d'affichage est vu d'en haut.

4. Dispositif électronique de la revendication 1, dans lequel une zone chevauchant la zone d'ouverture de lumière du panneau d'affichage (431) est configurée de sorte qu'une densité de disposition de la pluralité d'électrodes et/ou du matériau électroluminescent organique est inférieure à celle d'une zone d'affichage périphérique lorsque le dispositif d'affichage est vu d'en haut.

5. Dispositif électronique de la revendication 1, dans lequel l'au moins un élément de blocage de lumière comprend une pluralité d'éléments de blocage de lumière (464, 465, 466, 467, 468, 469) disposés dans au moins deux couches différentes, respectivement, à l'intérieur de la couche intermédiaire (431b).

6. Dispositif électronique de la revendication 5, dans lequel la pluralité d'éléments de blocage de lumière se chevauchent au moins partiellement lorsque le panneau d'affichage (431) est vu d'en haut.

7. Dispositif électronique de la revendication 1, comprenant en outre au moins un élément de blocage de lumière supplémentaire (471, 472, 480) disposé au niveau d'une surface supérieure et/ou d'une surface arrière du panneau d'affichage (431).

8. Dispositif électronique de la revendication 7, dans lequel l'au moins un élément de blocage de lumière supplémentaire (471, 472, 480) chevauche au moins partiellement l'au moins un élément de blocage de lumière (461, 462, 463) disposé dans la couche intermédiaire (431b) lorsque le panneau d'affichage (431) est vu d'en haut.

9. Dispositif électronique de la revendication 7, dans lequel l'au moins un élément de blocage de lumière supplémentaire est disposé en continu sans se déconnecter l'un de l'autre avec l'au moins un élément de blocage de lumière disposé dans la couche intermédiaire (431b) lorsque le panneau d'affichage (431) est vu d'en haut.

10. Dispositif électronique de la revendication 1, dans lequel la largeur de blocage de la zone de blocage de l'au moins un élément de blocage de lumière est formée au moins égale ou supérieure à une taille déterminée par l'<équation 1>

<Équation 1>

$$DS1 \geq (ha + \frac{hg}{ng}) \times \tan\frac{\theta}{2}$$

dans lequel ha est une distance verticale d'une partie d'extrémité d'un diamètre effectif de l'objectif (530, 531, 532, 533) à une surface arrière du panneau d'affichage (431), hg est une distance verticale de la surface arrière du panneau d'affichage à l'élément de blocage de lumière, ng est un indice de réfraction d'un matériau présent entre la surface arrière du panneau d'affichage et l'élément de blocage de lumière, et θ est un angle de vue formé par l'objectif.

11. Dispositif électronique de la revendication 1, dans lequel le dispositif d'affichage (400) comprend un élément polarisant, POL, (432) empilé dans une partie supérieure du panneau d'affichage (431), et l'au moins un élément de blocage de lumière est disposé entre l'élément polarisant et le panneau d'affichage.

# FIG. 1

# FIG. 2

# FIG. 3

FIG. 4

# FIG. 5

# FIG. 6A

FIG. 6B

# FIG. 7

# FIG. 8

# FIG. 9A

EP 3 996 359 B1

# FIG. 9B

EP 3 996 359 B1

# FIG. 9C

FIG. 9D

EP 3 996 359 B1

EP 3 996 359 B1

# FIG. 10A

EP 3 996 359 B1

FIG. 10B

EP 3 996 359 B1

FIG. 10C

# FIG. 10D

EP 3 996 359 B1

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110149470 A
- CN 110062082 A

- CN 110191216 A